(19) Europäisches Patentamt
European Patent Office
Office européen des brevets

(11) **EP 1 777 435 A1**

(12) **EUROPEAN PATENT APPLICATION**
published in accordance with Art. 158(3) EPC

(43) Date of publication:
**25.04.2007 Bulletin 2007/17**

(51) Int Cl.:
**F16F 15/02** (2006.01)

(21) Application number: **05758289.2**

(22) Date of filing: **08.07.2005**

(86) International application number:
**PCT/JP2005/012684**

(87) International publication number:
**WO 2006/013700 (09.02.2006 Gazette 2006/06)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **02.08.2004 JP 2004225877**
**07.01.2005 JP 2005003126**

(71) Applicant: **SEKISUI CHEMICAL CO., LTD.**
**Osaka-shi,**
**Osaka 530-8565 (JP)**

(72) Inventors:
• **YAMADA, Joji,**
**c/o Sekisui Chemical Co., Ltd.,**
**Hasuda-city,**
**Saitama 3490101 (JP)**
• **INOUE, Toshihiro,**
**c/o Sekisui Chemical Co., Ltd.,**
**Hasuda-city,**
**Saitama 3490101 (JP)**
• **ADACHI, Koichi,**
**c/o Sekisui Chemical Co., Ltd.,**
**Hasuda-city,**
**Saitama 3490101 (JP)**

(74) Representative: **Hollatz, Christian et al**
**Ter Meer Steinmeister & Partner GbR**
**Patentanwälte**
**Mauerkircherstrasse 45**
**81679 München (DE)**

(54) **DAMPING MATERIAL**

(57) The invention provides a vibration damping material excellent in vibration damping property and lightness, and in particular, a vibration damping material which can be preferably used for cars required to be light. In the vibration damping material of the invention, a foamed adhesive layer is integrally laminated onto one of the surfaces of a foamed thermoplastic resin sheet. Thus, vibration energy transmitted to the vibration damp-

ing material is smoothly absorbed by a synergetic effect of rigidity of the foamed thermoplastic resin sheet and viscoelasticity of the foamed adhesive layer, so that excellent vibration damping property is exhibited. Furthermore, the vibration damping material of the invention is excellent in lightness. Thus, the material can be preferably used for articles desired to be light, such as vehicles including cars and trains. The material is also excellent in a constructing property since the material is light.

Figure 1

**Description**

TECHNICAL FIELD

The present invention relates to a vibration damping material excellent in vibration damping property and lightness.

BACKGROUND ART

Hitherto, in electric appliances, a vibration damping material has been used in order to reduce vibration of a driving device such as a motor. Furthermore, for buildings, a vibration damping material has been used in order to decrease sounds of rain on folded-plate roofs or the like. For automobiles, a vibration damping material has been used in order to decrease vibration sounds caused by fine vibration of their roof, door or the like due to vibration generated in running, or vibration of a driving system such as an engine.

As such a vibration damping material, Patent Document 1 suggests a vibration damping sheet for a folded-plate roof wherein a polyethylene terephthalate resin layer is laminated on one of the surfaces of a vibration damping sheet substrate including a rubber or thermoplastic elastomer, a thermoplastic resin, and an inorganic powder.

This vibration damping sheet has a problem that the sheet is lacking in lightness due to its specific gravity of 1 $g/cm^3$ or more since the sheet is a member for converting vibration energy to heat loss by incorporating the inorganic powder into the sheet.

Apart from the above-mentioned vibration damping sheet, the vibration of an object which may vibrate (hereinafter referred to as a vibrating body) has been attenuated by causing a vibration damping sheet having a large specific gravity to stick onto the vibrating body. However, the method has the same problem that the vibration damping sheet is lacking in lightness.

Patent Document 1 : Japanese Laid-Open Patent Publication No. 10-183883

DISCLOSURE OF THE INVENTION

PROBLEMS TO BE SOLVED BY THE INVENTION

The present invention provides a vibration damping material excellent in vibration damping property and lightness, and in particular, a vibration damping material which can be preferably used for vehicles which are required to be light, such as cars and trains.

MEANS FOR SOLVING THE PROBLEMS

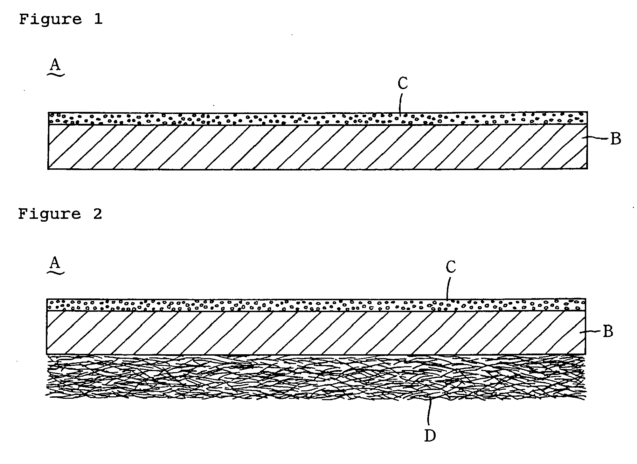

As illustrated in Fig. 1, the vibration damping material A of the invention is a vibration damping material which is fixed onto a surface of a vibrating body to attenuate the vibration of the vibrating body, including a nonmetallic sheet B and a foamed adhesive layer C integrally laminated on one of the surfaces of this nonmetallic sheet B.

The nonmetallic sheet B used in the vibration damping material of the invention may be a foamed thermoplastic resin sheet, or an unfoamed sheet having a Young's modulus of 100 to 100000 MPa.

The thermoplastic resin which constitutes the foamed thermoplastic resin sheet is not particularly limited, and examples thereof include polyolefin-based resins such as a polyethylene-based resin and a polypropylene-based resin, polystyrene-based resins, polyester-based resins, polyamide-based resins, and petroleum resin. Polyolefin-based resins are preferred. More preferably, the sheet contains a polypropylene-based resin. It is in particular preferred to use a polypropylene-based resin and a polyethylene-based resin together. The thermoplastic resins may be used alone or in combination of two or more thereof.

Examples of the polyethylene-based resin include high-density polyethylene, middle-density polyethylene, low-density polyethylene, and linear low-density polyethylene. Examples of the polypropylene-based resin include homopolypropylene, and a copolymer made from propylene and an olefin other than propylene.

Examples of the olefin which is copolymerized with propylene include α-olefins such as ethylene, 1-butene, 1-pentene, 4-methyl-1-pentene, 1-hexene, 1-octene, 1-nonene, and 1-decene.

In a case of using a polypropylene-based resin and a polyethylene-based resin together as the thermoplastic resin which constitutes the foamed thermoplastic resin sheet, it is preferred to use, as the polypropylene-based resin, isostatic homopolypropylene and a propylene/a-olefin copolymer together. It is more preferred to use isostatic homopolypropylene and a propylene/a-olefin copolymer together as the polypropylene-based resin and further use linear low-density polyethylene as the polyethylene-based resin.

If the density of the foamed thermoplastic resin sheet is large, the lightness of the vibration damping material may decline. Thus, the density is preferably 0.1 g/cm$^3$ or less, and more preferably from 0.02 to 0.1 g/cm$^3$.

Furthermore, if the Young's modulus of the foamed thermoplastic resin sheet is small, the vibration damping property of the vibration damping material may lower. On the other hand, if the Young's modulus is large, flexibility and moldability of the vibration damping material may lower. Thus, the Young's modulus is preferably from 10 to 100 MPa.

If a thickness of the foamed thermoplastic resin sheet is small, the vibration damping property and mechanical strength of the vibration damping material may fall. On the other hand, if the thickness is large, the lightness of the vibration damping material may fall. Thus, the thickness is preferably from 1 to 10 mm, and more preferably from 2 to 5 mm.

The foamed thermoplastic resin sheet may be a sheet obtained by integrally laminating plural foamed thermoplastic resin sheets of different kinds. In a case of integrally laminating plural foamed thermoplastic resin sheets of different kinds, it is preferred to integrally laminate two foamed thermoplastic resin sheets of different kinds. In a case of integrally laminating plural foamed thermoplastic resin sheets of different kinds, the Young's modulus of at least one of the foamed thermoplastic resin sheets is preferably from 10 to 100 MPa.

The method for producing the foamed thermoplastic resin sheet is not particularly limited, and may be, for example, a method of supplying a thermoplastic resin and a pyrolysis-type foaming agent into an extruder, melting and kneading a mixture thereof so as to be extruded and formed into a foamable resin sheet, optionally radiating an ionizing radiation such as an electron beam, an $\alpha$ ray, or a $\beta$ ray onto the foamable resin sheet so as to cross-link the resin, heating the foamable resin sheet at a decomposition temperature of the pyrolysis-type foaming agent or higher to foam the sheet, thereby producing a foamed thermoplastic resin sheet, or a method of supplying a thermoplastic resin and a physical-type foaming agent into an extruder, and melting and kneading the mixture thereof to produce a foamed thermoplastic resin sheet by extrusion foaming.

The pyrolysis-type foaming agent is not particularly limited as long as it has been hitherto used to produce a foam. Examples thereof include azodicarbonamide, benzenesulfonylhydrazide, dinitrosopentamethylenetetramine, toluenesulfonylhydrazide, and 4,4-oxybis (benzenesulfonylhydrazide), which may be used alone or in combination of two or more thereof.

Examples of the physical-type foaming agent include aliphatic hydrocarbons such as methane, ethane, propane, butane, isopentane, hexane, heptane, 1,1,2-trimethylcyclopropane, methylcyclopropane, ethylcyclobutane, cyclopentane, methylcyclopentane, and cyclohexane; halogenated aliphatic hydrocarbons such as trichloromonofluoromethane, dichlolofluoromethane, monochlorodifluoromethane, 1,1,1-trichlorotrifluoroethane, 1,1,2-trichlorotriffuoroethane, 1,2-dichlorotetrafluoroethane, 1-chloro-1,1-difluoroethane, and 1,1,1,2-tetrafluoroethane; ethers such as dimethyl ether, and 2-ethoxyethanol; ketones such as acetone, methyl ethyl ketone, and acetylacetone; and inert gases such as carbon dioxide, and nitrogen.

The Young's modulus of the unfoamed sheet is preferably from 100 to 100000 MPa. A material of the unfoamed sheet is not particularly limited as long as the material is a nonmetal. Examples of the material of the unfoamed sheet include polyolefin-based resins such as a polyethylene-based resin and a polypropylene-based resin, polystyrene-based resins, polyester-based resins, polyamide-based resins, polyimide-based resins, and petroleum resins, and other synthetic resins; woods; and inorganic materials. organic materials such as synthetic resins and woods are preferred. Synthetic resins are more preferred, and synthetic resins having a melting temperature of 150 °C or higher are in particular preferred. The materials of the unfoamed sheet may be used alone or in combination of two or more thereof. The melting temperature of the synthetic resins is a temperature measured in accordance with JIS K6921-2:2005 ("Plastic - Polypropylene (PP) Molding and Extruding Material - Part 2: Method of forming a test piece and method of obtaining a nature thereof').

Examples of the polyethylene-based resin include high-density polyethylene, middle-density polyethylene, low-density polyethylene, and linear low-density polyethylene. Examples of the polypropylene-based resin include homopolypropylene, and a copolymer made from propylene and an olefin other than propylene.

Examples of the olefin which is copolymerized with propylene include $\alpha$-olefins such as ethylene, 1-butene, 1-pentene, 4-methyl-1-pentene, 1-hexene, 1-octene, 1-nonene, and 1-decene.

If the Young's modulus of the unfoamed sheet is small, the vibration damping property of the vibration damping material may deteriorate. On the other hand, if the Young's modulus is large, the flexibility of the vibration damping material may deteriorate so that the vibration damping material may not be caused to stick stably onto the surface of the vibrating body. Thus, the Young's modulus is limited into a range of 100 to 100000 MPa, and is preferably from 500 to 10000 MPa.

The Young's modulus of the nonmetallic sheet is a value measured in a way described hereinafter. A punching-out die prescribed in JIS K6251, 4.4 (Punching-out die of a test piece) is used to punch out a nonmetallic sheet into the form of a dumbbell No. 1 prescribed in JIS K6251, 4.1 (Shape and size of a test piece), thereby yielding a test piece. Upper and lower surfaces of the test piece are adjusted to be made parallel to each other. Next, a thickness t (m) of the test piece at a center thereof in a length direction and a width direction is measured, and further a length W (m) of the test piece in the width direction at the center thereof in the length direction is measured.

Subsequently, the test piece is fitted to a pair of grasping tools in a tension tester. The pair of grasping tools are each set up at a site of the test piece which is positioned inside by 20 mm from each end in the length direction of the test piece, and an interval between the grasping tools is set to 80 mm.

Thereafter, the grasping tools in the tension tester are separated from each other to lengthen the test piece by 0.5 mm in the length direction at a tensile rate of 1000 mm/minute. Immediately after this, the grasping tools are brought close to each other at a rate of 1000 mm/minute so as to restore the test piece to the original state. This lengthening and restoring action of the test piece is regarded as one cycle, and three cycles thereof are performed. A maximum load F (N) applied to the test piece in the three cycles is measured, and then a Young's modulus Y (Pa) of the nonmetallic sheet is calculated based on the following equation. In the equation, (0.5/60) represents an elongation strain of the test piece.

$$Y\ (Pa) = F/\{(W \times t) \times (0.5/60)\}$$

If the thickness of the unfoamed sheet is small, the vibration damping property of the vibration damping material may deteriorate. On the other hand, if the thickness is large, the lightness of the vibration damping material may lower. Thus, the thickness is preferably from 0.04 to 2 mm.

In order to improve the lightness of the vibration damping material A, it is preferred that the nonmetallic sheet does not contain any inorganic filler. Examples of the inorganic filler include calcium carbonate, magnesium carbonate, silicates (such as kaolin and talc), silicic acids (such as silicious marl, light silicic anhydride, and white carbon), zinc oxide (flowers of zinc), titanium oxide, barium sulfate, and calcium sulfate.

The foamed adhesive layer C is integrally laminated on one of the surfaces of this nonmetallic sheet B. The adhesive which constitutes this foamed adhesive layer C is not particularly limited, and examples thereof include a urethane-based adhesive, and an acrylic-based adhesive. The adhesive preferably includes an acrylic-based adhesive.

When a cross-linking agent is incorporated into the foamed adhesive layer C to cross-link the foamed adhesive layer C, the thickness precision of the foamed adhesive layer C can be improved while the vibration damping effect based on the viscoelasticity of the foamed adhesive layer C is maintained. The cross-linking agent is not particularly limited as long as the agent makes it possible to cross-link the foamed adhesive layer C. Examples thereof include epoxy-based cross-linking agent, amine-based cross-linking agents, and silane-based cross-linking agents.

If the content of the cross-linking agent in the foamed adhesive layer C is large, the cross-link density of the foamed adhesive layer becomes too high so that the vibration damping effect of the foamed adhesive layer based on viscoelasticity may conversely lower. Thus, the amount thereof is preferably 6 parts by weight or less, and more preferably from 1 to 4 parts by weight per 100 parts by weight of the resin components which constitute the foamed adhesive layer C.

If the density of the foamed adhesive layer C is small, the vibration damping effect of the foamed adhesive layer based on viscoelasticity may lower. On the other hand, if the density is large, the lightness of the vibration damping material may lower. Thus, the density is preferably from 0.05 to 1 g/cm$^3$, and more preferably from 0.1 to 1 g/cm$^3$, in particular preferably from 0.15 to 1 g/cm$^3$.

If the thickness of the foamed adhesive layer C is small, the vibration damping effect of the foamed adhesive layer based on viscoelasticity may lower. On the other hand, if the thickness is large, the lightness of the vibration damping material may lower. Thus, the thickness is preferably from 0.5 to 5 mm, and more preferably from 1 to 3 mm.

In order to improve the lightness of the vibration damping material A, it is preferred that the foamed adhesive layer C does not contain any inorganic filler. Examples of the inorganic filler include calcium carbonate, magnesium carbonate, silicates (such as kaolin and talc), silicic acids (such as silicious marl, light silicic anhydride, and white carbon), zinc oxide (flowers of zinc), titanium oxide, barium sulfate, and calcium sulfate.

As the method of using the above-mentioned adhesive to produce the foamed adhesive layer C, a known method can be used, an example of which is a method of incorporating air into an emulsion of the adhesive to generate foams, thereby preparing a foamed adhesive emulsion, painting this foamed adhesive emulsion onto any surface to give a predetermined thickness, and then drying the emulsion.

The method of integrally laminating the foamed adhesive layer C onto one of the surfaces of the nonmetallic sheet B to produce the vibration damping material A is not particularly limited, and examples thereof include a method of integrally laminating the foamed adhesive layer C onto one of the surfaces of the nonmetallic sheet B through a double-faced adhesive tape, thereby producing the vibration damping material A; a method of integrally laminating the foamed adhesive layer C onto one of the surfaces of the nonmetallic sheet B through an adhesive, thereby producing the vibration damping material A; and a method of painting the foamed adhesive emulsion directly onto one of the surfaces of the nonmetallic sheet B, and drying the foamed adhesive emulsion to integrally laminate the foamed adhesive layer C onto one of the surfaces of the nonmetallic sheet B, thereby producing the vibration damping material A.

If the thickness of the vibration damping material, wherein the foamed adhesive layer C is integrally laminated onto one of the surfaces of the nonmetallic sheet B, is small, the vibration damping property of the vibration damping material may deteriorate or the mechanical strength thereof may decline. On the other hand, if the thickness is large, the lightness of the vibration damping material may lower. Thus, the thickness is preferably from 1.0 to 15 mm, and more preferably from 1.0 to 10 mm, in particular preferably from 1.5 to 5 mm.

A thermoplastic resin sheet may be interposed between the nonmetallic sheet B and foamed adhesive layer C. Examples of the thermoplastic resin which constitutes this thermoplastic resin sheet include polyolefin-based resins such as a polyethylene-based resin and a polypropylene-based resin, polystyrene-based resins, polyester-based resins, polyamide-based resins, polyimide-based resins, and petroleum resins. The thickness of the thermoplastic resin sheet is preferably from 1 to 8 mm, and more preferably from 2 to 5 mm. If the thickness of the thermoplastic resin sheet is small, the bending rigidity of the vibration damping material becomes small so that the handleability of the vibration damping material may deteriorate when the vibration damping material is stuck onto a vibrating body; on the other hand, if the thickness is large, the vibration damping material may not be easily wounded into a circular form. The Young's modulus of the thermoplastic resin sheet interposed between the nonmetallic sheet B and the foamed adhesive layer C is not particularly limited.

Examples of the polyethylene-based resin include high-density polyethylene, middle-density polyethylene, low-density polyethylene, and linear low-density polyethylene. Examples of the polypropylene-based resin include homopolypropylene, and a copolymer made from propylene and an olefin other than propylene.

When the nonmetallic sheet B is an unfoamed sheet having a Young's modulus of 100 to 100000 MPa, the above-mentioned foamed thermoplastic resin sheet may be interposed between the nonmetallic sheet B and the foamed adhesive layer C.

The above has described a case wherein the vibration damping material A includes the nonmetallic sheet B and the foamed adhesive layer C, which is integrally laminated onto one of the surfaces of this nonmetallic sheet B; however, plural vibration damping materials A, A, ... ... may be integrally laminated with each other in the thickness direction thereof. In this case, it is necessary to laminate the vibration damping materials A, A, ... ... so as to arrange each of their nonmetallic sheets B and each of their foamed adhesive layers C alternately.

As illustrated in Fig. 2, a fibrous layer D may be integrally laminated onto the other surface of the nonmetallic sheet B. Examples of this fibrous layer D include a nonwoven fabric, a woven fabric, and a knitted fabric. The nonwoven fabric is preferred.

The fiber which constitutes the fibrous layer D is not particularly limited, and examples thereof include synthetic resin fibers; inorganic fibers such as glass fiber and metallic fiber; and natural fibers such as cotton, hemp, and silk. Examples of the synthetic resin which constitutes the synthetic resin fiber include polyamide-based resins such as nylon; polyester-based resins; polyolefin-based resins such as polyethylene and polypropylene; and rayon. The fiber diameter of the fiber which constitutes the fibrous layer D is preferably from 0.1 $\mu$m to 1 mm, and more preferably from 1 to 500 $\mu$m.

If the thickness of the fibrous layer D is small, the sound insulating property of the vibration damping material may decline. On the other hand, if the thickness is large, the lightness of the vibration damping material may lower. Thus, the thickness is preferably from 3 to 30 mm, and more preferably from 5 to 20 mm. If the density of the fibrous layer D is large, the lightness of the vibration damping material may lower. Thus, the density is preferably 0.5 g/cm$^3$ or less, and more preferably from 0.01 to 0.3 g/cm$^3$.

If the thickness of the vibration damping material, wherein the foamed adhesive layer C is integrally laminated onto one of the surfaces of the nonmetallic sheet B and further the fibrous layer D is integrally laminated onto the other surface, is small, the sound insulating property of the vibration damping material may decline. On the other hand, if the thickness is large, the lightness of the vibration damping material may lower. Thus, the thickness is preferably from 4 to 45 mm, and more preferably from 4.5 to 32 mm.

The method for integrally laminating the fibrous layer D onto the other surface of the nonmetallic sheet B is not particularly limited, and is, for example, a method of integrally laminating the fibrous layer D onto the other surface of the nonmetallic sheet B through a double-faced adhesive tape. Besides, in a case where the fiber which constitutes the fibrous layer D is a synthetic resin fiber, the method is, for example, a method of integrally laminating the fibrous layer D onto the other surface of the nonmetallic sheet B by thermally melt-bonding force of the synthetic resin fiber.

The vibration damping material A is used in a state that the material is fixed onto a surface of a vibrating body so as to position the foamed adhesive layer C thereof on the side of the vibrating body. The vibration damping material causes the vibration energy of the vibrating body to be changed to thermal energy, whereby the vibration of the vibrating body is attenuated so that the vibration of the vibrating body is reduced or stopped. As an index for representing the vibration damping property of vibration damping materials, the loss factor thereof is used. The loss factor of the vibration damping material is preferably 0.05 or more for all frequencies in the frequency range of 270 to 4500 Hz.

In a case where the fibrous layer D is integrally laminated onto the other surface of the nonmetallic sheet B of the vibration damping material, the vibration damping material exhibits not only a vibration damping effect but also an excellent sound insulating property.

The method for fixing the vibration damping material A onto a surface of a vibrating body is, for example, a method of using a double-faced adhesive tape to fix the vibration damping material A onto the surface of the vibrating body, or a method of fixing the vibration damping material A onto the surface of the vibrating body by adhesive force of the foamed adhesive layer C of the vibration damping material A.

EFFECTS OF THE INVENTION

Since the vibration damping material of the invention has the above-mentioned structure, the vibration energy of a vibrating body is changed to thermal energy by the rigidity of its nonmetallic sheet and viscoelasticity of its foamed adhesive layer so that the vibration damping material smoothly absorbs the energy to exhibit an excellent vibration damping property.

Moreover, the vibration damping material of the invention is composed of a nonmetallic sheet and a foamed adhesive layer integrally laminated onto one of the surfaces of this nonmetallic sheet, and thus the vibration damping material is excellent in lightness. Accordingly, the vibration damping material of the invention can be preferably used for articles desired to be made light, such as vehicles such as cars or trains, also. Furthermore, the vibration damping material is excellent in a constructing property since the material is light. The vibration damping material is also so good in moldability that the material can be molded into desired shapes and fixed precisely onto surfaces of vibrating bodies having various shapes, thereby damping the vibration of the vibrating bodies.

The vibration damping material of the invention is not required to contain any metallic material or inorganic filler. Thus, the material can easily be fractionated when the material is scraped. Furthermore, when the material is incinerated, the amount of generated ash is small. Thus, the material can easily be incinerated for disposal.

When 6 parts or less of a cross-linking agent is contained per 100 parts by weight of the resin components which constitute the foamed adhesive layer in this layer, the thickness precision of the foamed adhesive layer can be improved while the vibration damping property of the foamed adhesive layer based on viscoelasticity is maintained.

Furthermore, when a fibrous layer is integrally laminated onto the other surface of the foamed thermoplastic resin sheet, excellent sound insulating property can be given to the vibration damping material. Thus, the vibration damping material can be preferably used for vehicles such as cars and trains, which are required to have both of vibration damping property and sound insulating property.

BRIEF DESCRIPTION OF THE DRAWINGS

[Fig. 1] It is a sectional view of a vibration damping material of the invention.
[Fig. 2] It is a sectional view of the vibration damping material of the invention.
[Fig. 3] It is a graph showing loss factors measured in examples.
[Fig. 4] It is a graph showing the loss factors measured in further examples.
[Fig. 5] It is a perspective view illustrating a sound insulating test room used when sound insulating property is measured.

DESCRIPTION OF SYMBOLS

1   Floor portion
2   Right and left wall portions
3   Back side wall portion
4   Roof portion
A   Vibration damping material
B   Nonmetallic sheet
C   Foamed adhesive layer
D   Fibrous layer

BEST MODE FOR CARRYING OUT THE INVENTION

Aspects of the invention will be more specifically described by the following examples. However, the invention is not limited to these examples.

(Example 1)

The following were homogeneously mixed: 90 parts by weight of a water-acrylic-based adhesive emulsion (trade name: "VONCOAT 350", manufactured by Dainippon Ink and Chemicals, Incorporated; acrylic-based adhesive component (resin composition): 50% by weight); 10 parts by weight of a water-urethane-based adhesive emulsion (trade name: "HYDRAN HW-930", manufactured by Dainippon Ink and Chemicals, Incorporated; urethane-based adhesive component (resin component): 50% by weight); 3 parts by weight of an epoxy-based cross-linking agent (trade name: CR-5L, manufactured by Dainippon Ink and Chemicals, Incorporated); 5 parts by weight of an ammonium chloride-based foaming agent (trade name: "F-1", manufactured by Dainippon Ink and Chemicals, Incorporated); 0.5 part by weight of a silicone-based foam adjuster (trade name: "VONCOAT NBA-1", manufactured by Dainippon Ink and Chemicals, Incorporated); and 6 parts by weight of a solution of carboxymethylcellulose in water (manufactured by Daicel Chemical Industries, Ltd.; 4% by weight). Thereafter, the resultant was filtrated to produce an adhesive emulsion. A foaming device was used to incorporate air into this adhesive emulsion to foam the adhesive emulsion. In this way, a foamed adhesive emulsion was produced.

Next, prepared was a polyethylene terephthalate film having one of the surfaces subjected to releasing treatment. The foamed adhesive emulsion was painted onto the polyethylene terephthalate film surface subjected to the releasing treatment so as to give a uniform thickness. Thereafter, water content in the foamed adhesive emulsion was evaporated and removed to produce a foamed adhesive sheet wherein a foamed adhesive layer (density: 0.20 g/cm$^3$) 1.9 mm in thickness was laminated onto the polyethylene terephthalate film. The foamed adhesive layer contained 6 parts by weight of the epoxy-based cross-linking agent per 100 parts by weight of the resin constituting this foamed adhesive layer.

Separately, 14 parts by weight of a polyethylene (trade name: "LE-520H", manufactured by Sumitomo Mitsui Polyolefin Co., Ltd.), 14 parts by weight of azodicarbonamide (trade name: "SO-40", manufactured by Ohtsuka Pharmaceutical Co., Ltd.), and 1 part by weight of an antioxidant (trade name: "ADEKASTAB 328", manufactured by Asahi Denka K.K.) were supplied to an extruder, and then melted and kneaded to be extruded. In this way, a foamable resin sheet 1.3 mm in thickness was yielded.

An electron beam was radiated at an acceleration voltage of 800 kV and 2.4 Mrad onto both surfaces of the resultant foamable resin sheet to cross-link the foamable resin sheet. This foamable resin sheet was heated to 250 °C to yield a foamed thermoplastic resin sheet. This foamed thermoplastic resin sheet had a thickness of 4.2 mm and a density of 0.025 g/cm$^3$. The Young's modulus of the foamed thermoplastic resin sheet was 1.78 MPa.

The foamed adhesive sheet was overlapped onto one of the surfaces of the foamed thermoplastic resin sheet through a double-faced adhesive tape (trade name: "SEKISUI TAPE No. 5761", manufactured by Sekisui Chemical Co., Ltd.) so as to arrange the foamed adhesive layer of the foamed adhesive sheet on the side of the foamed thermoplastic resin sheet. In this way, the foamed adhesive layer was integrally laminated onto one of the surfaces of the foamed thermoplastic resin sheet, thereby yielding a vibration damping material 6.1 mm in thickness. The polyethylene terephthalate film was striped from the foamed adhesive layer, and removed.

(Example 2)

A foamed thermoplastic resin sheet was yielded in the same way as in Example 1 except that the amount of azodicarbonamide was changed from 14 parts by weight to 21 parts by weight, the thickness of the foamable resin sheet was changed from 1.3 mm to 2.6 mm, and an electron beam was radiated at an acceleration voltage of 500 kV and 3.8 Mrad instead of radiating the electron beam at the acceleration voltage of 800 kV and 2.4 Mrad onto both of the surfaces of the foamable resin sheet. The foamed thermoplastic resin sheet had a thickness of 8.6 mm and a density of 0.033 g/cm$^3$. The Young's modulus of the foamed thermoplastic resin sheet was 1.40 MPa. A foamed adhesive layer formed in the same way as in Example 1 was integrally laminated onto one of the surfaces of the foamed thermoplastic resin sheet in the same way as in Example 1. In this way, a vibration damping material 10.5 mm in thickness was yielded.

(Example 3)

The following were supplied to an extruder: a polypropylene-based resin composed of 45 parts by weight of an ethylene/propylene random copolymer (trade name: "XK0235", manufactured by Chisso Corporation) and 15 parts by weight of an isostatic homopolypropylene (trade name: "SH152", manufactured by Idemitsu Petrochemical Co., Ltd.); 40 parts by weight of a linear low-density polyethylene (trade name: "0238CN", manufactured by Idemitsu Petrochemical Co., Ltd.); 6.8 parts by weight of azodicarbonamide; 3 parts by weight of a cross-linking agent (trade name: "TND-23H", manufactured by Kyoeisha Chemical Co., Ltd.); 1 part by weight of an antioxidant A (trade name: "ADEKASTAB AO-60", manufactured by Asahi Denka K.K.); 0.5 part by weight of an antioxidant B (trade name: "ADEKASTAB CDA-1", manufactured by Asahi Denka K.K.); and 0.5 part by weight of an antioxidant C (trade name: "NOCRAC 400S", manufactured by Ouchi-Shinko Chemical Industrial Co., Ltd.). The mixture was melted and kneaded to yield a foamable resin sheet 1.2 mm in thickness.

An electron beam was radiated at an acceleration voltage of 800 kV and 3.6 Mrad onto both surfaces of the resultant foamable resin sheet to cross-link the foamable resin sheet. Next, this foamable resin sheet was heated to 250 °C to yield a foamed thermoplastic resin sheet. This foamed thermoplastic resin sheet had a thickness of 2.9 mm and a density of 0.070 g/cm$^3$. The Young's modulus of the foamed thermoplastic resin sheet was 19.4 MPa.

A foamed adhesive layer formed in the same way as in Example 1 was integrally laminated onto one of the surfaces of the foamed thermoplastic resin sheet in the same way as in Example 1, thereby yielding a vibration damping material 4.8 mm in thickness,

(Example 4)

A foamed thermoplastic resin sheet was yielded in the same way as in Example 3 except that the amount of the ethylene/propylene random copolymer was changed from 45 parts by weight to 55 parts by weight, the amount of the isostatic homopolypropylene was changed from 15 parts by weight to 25 parts by weight, and the amount of the linear low-density polyethylene was changed from 40 parts by weight to 20 parts by weight. This foamed thermoplastic resin sheet had a thickness of 2.5 mm and a density of 0.070 g/cm$^3$. The Young's modulus of the foamed thermoplastic resin sheet was 23.8 MPa.

A foamed adhesive layer formed in the same way as in Example 1 was integrally laminated onto one of the surfaces of the foamed thermoplastic resin sheet in the same way as in Example 1, thereby yielding a vibration damping material 4.4 mm in thickness.

(Example 5)

A foamed thermoplastic resin sheet was yielded in the same way as in Example 3 except that the amount of the ethylene/propylene random copolymer was changed from 45 parts by weight to 55 parts by weight, the amount of the isostatic homopolypropylene was changed from 15 parts by weight to 25 parts by weight, the amount of the linear low-density polyethylene was changed from 40 parts by weight to 20 parts by weight, and after the electron beam was radiated at the acceleration voltage of 800 kV and 3.6 Mrad onto both of the surfaces of the foamable resin sheet to cross-link the foamable resin sheet, an electron beam was further radiated at an acceleration voltage of 540 kV and 1.7 Mrad onto both of the surfaces of the foamable resin sheet. This foamed thermoplastic resin sheet had a thickness of 2.4 mm and a density of 0.070 g/cm$^3$. The Young's modulus of the foamed thermoplastic resin sheet was 35.6 MPa.

A foamed adhesive layer formed in the same way as in Example 1 was integrally laminated onto one of the surfaces of the foamed thermoplastic resin sheet in the same way as in Example 1, thereby yielding a vibration damping material 4.3 mm in thickness.

(Example 6)

A foamed adhesive sheet was formed in the same way as in Example 1 except that the amount of the epoxy-based cross-linking agent was changed from 3 parts by weight to 2 parts by weight. Separately, a foamed thermoplastic resin sheet was formed in the same way as in Example 3.

The foamed adhesive layer of the adhesive sheet was integrally laminated onto one of the surfaces of the foamed thermoplastic resin sheet in the same way as in Example 1, thereby yielding a vibration damping material 4.8 mm in thickness. The resultant foamed adhesive layer contained 4 parts by weight of the epoxy-based cross-linking agent per 100 parts by weight of the resin component constituting this foamed adhesive layer. The foamed adhesive layer had a thickness of 1.9 mm and a density of 0.18 g/cm$^3$.

(Example 7)

A foamed adhesive sheet was formed in the same way as in Example 1 except that the amount of the epoxy-based cross-linking agent was changed from 3 parts by weight to 0.6 part by weight. Separately, a foamed thermoplastic resin sheet was formed in the same way as in Example 3.

The foamed adhesive layer of the adhesive sheet was integrally laminated onto one of the surfaces of the foamed thermoplastic resin sheet in the same way as in Example 1, thereby yielding a vibration damping material 4.8 mm in thickness. The resultant foamed adhesive layer contained 1.2 parts by weight of the epoxy-based cross-linking agent per 100 parts by weight of the resin component constituting this foamed adhesive layer. The foamed adhesive layer had a thickness of 1.9 mm and a density of 0.19 g/cm3.

(Example 8)

A foamed adhesive sheet was formed in the same way as in Example 1. Separately, a foamed thermoplastic resin sheet was formed in the same way as in Example 3. The foamed adhesive sheet was overlapped onto one of the surfaces of the foamed thermoplastic resin sheet through a double-faced adhesive tape (trade name: "SEKISUI TAPE No. 5761", manufactured by Sekisui Chemical Co., Ltd.) so as to arrange the foamed adhesive layer of the foamed adhesive sheet on the side of the foamed thermoplastic resin sheet. In this way, the foamed adhesive layer was integrally laminated onto one of the surfaces of the foamed thermoplastic resin sheet.

Furthermore, a nonwoven fabric (fiber diameter: 200 $\mu$m, density: 0.03 g/cm$^3$, and thickness: 10 mm) made of polyethylene terephthalate fiber was integrally laminated onto the other surface of the foamed thermoplastic resin sheet through a double-faced adhesive tape (trade name: "SEKISUI TAPE No. 5761", manufactured by Sekisui Chemical Co., Ltd.), thereby yielding a vibration damping material 14.8 mm in thickness. The polyethylene terephthalate film was striped from the foamed adhesive layer, and removed.

(Example 9)

The following were homogeneously mixed: 90 parts by weight of a water-acrylic-based adhesive emulsion (trade name: "VONCOAT 350", manufactured by Dainippon Ink and Chemicals, Incorporated; acrylic-based adhesive component (resin composition) : 50% by weight); 10 parts by weight of a water-urethane-based adhesive emulsion (trade name: "HYDRAN HW-930", manufactured by Dainippon Ink and Chemicals, Incorporated; urethane-based adhesive component (resin component): 50% by weight); 5 parts by weight of an ammonium chloride-based foaming agent (trade name: "F-1", manufactured by Dainippon Ink and Chemicals, Incorporated); 0.5 part by weight of a silicone-based foam adjuster (trade name: "VONCOAT NBA-1", manufactured by Dainippon Ink and Chemicals, Incorporated); and 6 parts by weight of a solution of carboxymethylcellulose in water (manufactured by Daicel Chemical Industries, Ltd.; 4% by weight). Thereafter, the resultant was filtrated to produce an adhesive emulsion. A foaming device was used to incorporate air into this adhesive emulsion to foam the adhesive emulsion. In this way, a foamed adhesive emulsion was produced.

Next, prepared was a polyethylene terephthalate film having one of the surfaces subjected to releasing treatment. The foamed adhesive emulsion was painted onto the polyethylene terephthalate film surface subjected to the releasing treatment so as to give a uniform thickness. Thereafter, water content in the foamed adhesive emulsion was evaporated and removed to produce a foamed adhesive sheet wherein a foamed adhesive layer (density: 0.23 g/cm$^3$) 1.1 mm in thickness was laminated onto the polyethylene terephthalate film.

The foamed adhesive sheet was overlapped onto one of the surfaces of a polyester film (trade name: "Lumirror T60#50", manufactured by Toray Industries, Inc.; Young's modulus: 3270 MPa, and melting temperature of the polyester: 105 °C) 0.05 mm in thickness through a double-faced adhesive tape (trade name: "SEKISUI TAPE No. 5761", manufactured by Sekisui Chemical Co., Ltd.) so as to arrange the foamed adhesive layer of the foamed adhesive sheet on the side of the polyester sheet. In this way, the foamed adhesive layer was integrally laminated onto one of the surfaces of the polyester sheet, thereby yielding a vibration damping material. The polyethylene terephthalate film was striped from the foamed adhesive layer, and removed.

(Example 10)

A vibration damping material was yielded in the same way as in Example 9 except that the thickness of the foamed adhesive layer (density: 0.23 g/cm$^3$) of the foamed adhesive sheet was adjusted to 1.0 mm, and there was used, as the polyester sheet, a polyester sheet (trade name: "Diafoil", manufactured by Mitsubishi Polyester Film Corporation; Young's modulus: 3160 MPa, and melting temperature of the polyester: 105 °C) 0.05 mm in thickness.

(Example 11)

A vibration damping material was yielded in the same way as in Example 9 except that instead of the polyester sheet, there was used a polyimide sheet (trade name: "Kapton", manufactured by Du Pont-Toray Co., Ltd.; Young's modulus: 4310 MPa, and melting temperature of the polyimide: 220 °C) 0.08 mm in thickness.

(Example 12)

A vibration damping material was yielded in the same way as in Example 9 except that the adhesive emulsion was produced by use of further addition of 3 parts by weight of an epoxy-based cross-linking agent (trade name: "CR-5L", manufactured by Dainippon Ink and Chemicals, Incorporated), and the thickness of the foamed adhesive layer (density: 0.20 g/cm$^3$) of the foamed adhesive sheet was adjusted to 1.9 mm. The foamed adhesive layer contained 6 parts by weight of the epoxy-based cross-linking agent per 100 parts by weight of the resin component constituting this foamed adhesive layer.

(Example 13)

A vibration damping material was yielded in the same way as in Example 9 except that the adhesive emulsion was produced by use of further addition of 1.2 parts by weight of an epoxy-based cross-linking agent (trade name: "CR-5L", manufactured by Dainippon Ink and Chemicals, Incorporated), and the thickness of the foamed adhesive layer (density: 0.19 g/cm$^3$) of the foamed adhesive sheet was adjusted to 1.9 mm. The foamed adhesive layer contained 2.4 parts by weight of the epoxy-based cross-linking agent per 100 parts by weight of the resin component constituting this foamed adhesive layer.

(Example 14)

A vibration damping material was yielded in the same way as in Example 9 except that the adhesive emulsion was produced by use of further addition of 0.5 part by weight of an epoxy-based cross-linking agent (trade name: "CR-5L", manufactured by Dainippon Ink and Chemicals, Incorporated), and the thickness of the foamed adhesive layer (density: 0.19 g/cm$^3$) of the foamed adhesive sheet was adjusted to 1.9 mm. The foamed adhesive layer contained 1 part by weight of the epoxy-based cross-linking agent per 100 parts by weight of the resin component constituting this foamed adhesive layer.

(Comparative Example 1)

A foamed adhesive sheet was produced in the same way as in Example 1.

(Comparative Example 2)

The following were supplied to an extruder: 55 parts by weight of an ethylene/propylene random copolymer (trade name: "XK0235", manufactured by Chisso Corporation), 25 parts by weight of an isostatic homopolypropylene (trade name: "SH152", manufactured by Idemitsu Petrochemical Co., Ltd.), 20 parts by weight of a linear low-density polyethylene (trade name: "0238CN", manufactured by Idemitsu Petrochemical Co., Ltd.), 6.8 parts by weight of azodicarbonamide, 3 parts by weight of a cross-linking agent (trade name: "TND-23H", manufactured by Kyoeisha Chemical Co., Ltd.), 1 part by weight of an antioxidant A (trade name: "ADEKASTAB AO-60", manufactured by Asahi Denka K.K.), 0.5 part by weight of an antioxidant B (trade name: "ADEKASTAB CDA-1", manufactured by Asahi Denka K.K.), and 0.5 part by weight of an antioxidant C (trade name: "NOCRAC 400S", manufactured by Ouchi-Shinko Chemical Industrial Co., Ltd.). The mixture was melted and kneaded to yield a foamable resin sheet 1.2 mm in thickness.
An electron beam was radiated at an acceleration voltage of 800 kV and 3.6 Mrad onto both surfaces of the resultant foamable resin sheet to cross-link the foamable resin sheet. Next, this foamable resin sheet was heated to 250 °C to yield a foamed thermoplastic resin sheet. This foamed thermoplastic resin sheet had a thickness of 3.0 mm and a density of 0.038 g/cm$^3$. The Young's modulus of the foamed thermoplastic resin sheet was 18.7 MPa.

(Comparative Example 3)

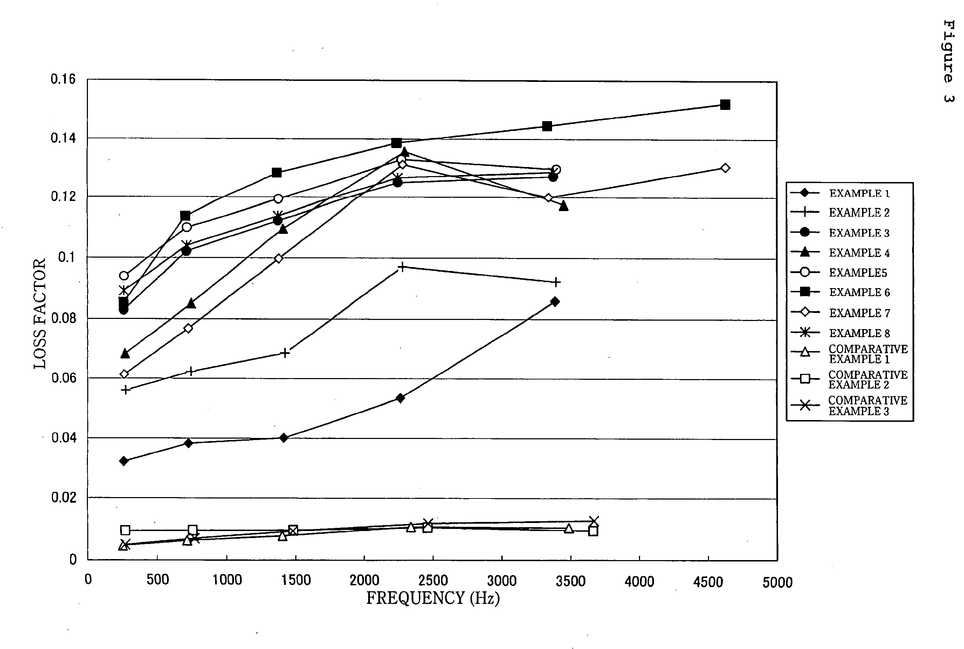

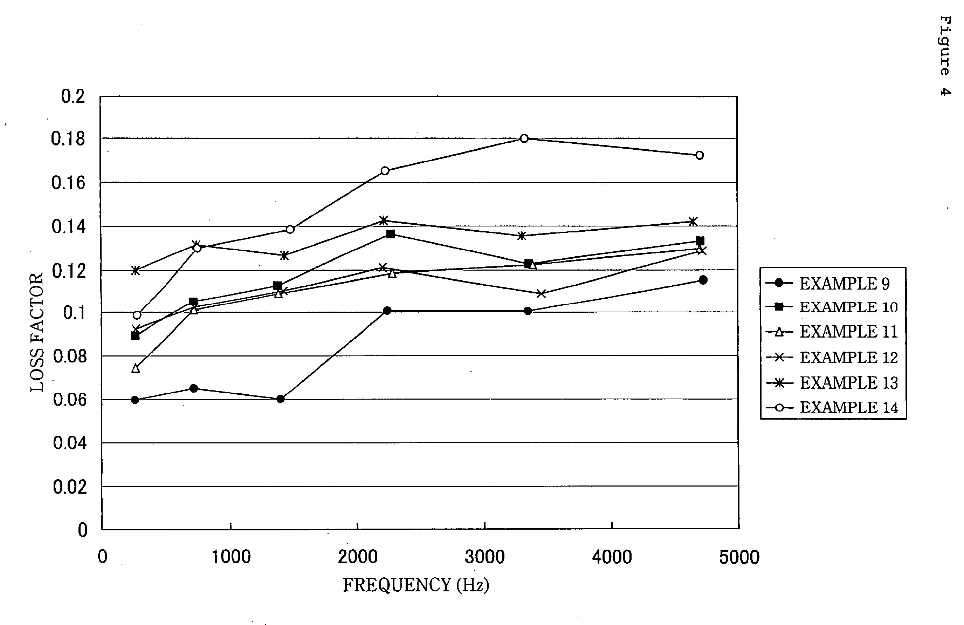

Two nonwoven fabrics which each had a thickness of 23 mm and were made of polyester fiber (trade name : "Thinsulate", manufactured by Sumitomo 3M Ltd. ; weight per unit area: 400 g/m$^2$) were integrally laminated with each other, so as to yield a nonwoven fabric laminate.
The vibration damping property of the resultant vibration damping materials, the foamed adhesive layer of the resultant foamed adhesive sheet, the resultant foamed thermoplastic resin sheet and nonwoven fabric laminate were measured by a method described below. The results are shown in Figs. 3 and 4, and Tables 2 to 4, and further the sound insulating property of the vibration damping materials, the foamed adhesive layer of the foamed adhesive sheet, the foamed thermoplastic resin sheet, and the nonwoven fabric laminate (Examples 1 to 8, and Comparative Examples 1 to 3) were measured. The results are shown in Table 5.

(Vibration damping property)

The loss factor of each test piece was measured at frequencies of 270 to 4600 Hz in accordance with a center-supporting regularly-vibrating method prescribed in JIS G0602, and the measured loss factor was used as an index for vibration damping property. Specifically, a test piece having a planar rectangular shape having a length of 15 mm and a width of 250 mm was cut off from each of the vibration damping materials, the foamed adhesive layer, the foamed thermoplastic resin sheet and the nonwoven fabric laminate. This test piece was stuck onto a steel plate prescribed in JIS G3141 (SPCC-SB; a planar rectangular shape (length: 15 mm, and width: 250 mm), and thickness: 0.5 mm) through a double-faced adhesive tape (trade name: "SEKISUI TAPE No. 5761", manufactured by Sekisui Chemical Co., Ltd.) so as to measure the loss factor at frequencies of 270 to 4600 Hz. When the vibration damping material was stuck onto the steel plate, the vibration damping material was set to arrange the foamed adhesive layer of the vibration damping material on the side of the steel plate.

In Examples 1 to 5, and Example 8, no loss factors were measured in the frequency range of about 3400 Hz or more. This is because the vibration damping materials exhibited such a sufficient vibration damping property that no resonance points of the vibration damping materials were able to be found out in the frequency range of about 3400 Hz or more. The vibration damping materials exhibit a vibration damping property similar to that near about 3300 Hz in the frequency range of about 3400 Hz or more also.

(Sound insulating property)

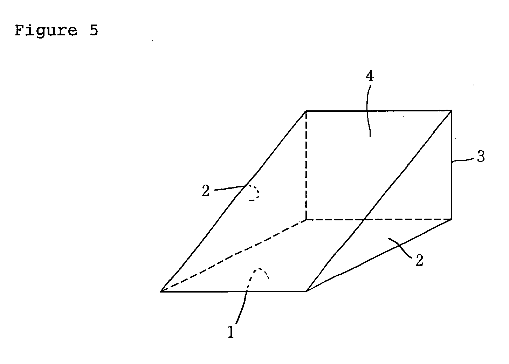

As illustrated in Fig. 5, prepared was a sound insulating test room made of a planar rectangular floor portion 1, right and left wall portions 2 and 2 which were vertically extended upwards from the right and left edges of this floor portion 1, a back side wall portion 3 which was vertically extended from the back edge of the floor portion 1, a roof portion 4 arranged to be linked onto the upper edges of the back side wall portion and the right and left wall portions, and metal-pressed roof tiles [trade name: "SEKISUI KAWARA", manufactured by Sekisui Chemical Co., Ltd.] (which was not illustrated) and which was laid on the entire upper surface of this roof portion 4. The roof portion 4 was a planar rectangular shape having a width of 1200 mm and a length of 3500 mm. The height from the center (gravity center) of the roof portion 4 to the upper surface of the floor portion 1 was about 55 cm.

Next, each of the vibration damping materials, the foamed adhesive layer of the foamed adhesive sheet, the foamed thermoplastic resin sheet, or the nonwoven fabric laminate was stuck onto the entire lower surface of the roof portion 4 through a double-faced adhesive tape (trade name: "SEKISUI TAPE No. 5761", manufactured by Sekisui Chemical Co., Ltd.). The foamed adhesive layer of the vibration damping material was arranged on the side of the roof portion 4.

Thereafter, an artificial rainfall machine was used to cause an artificial rain (diameter of raindrops: 3 mm, and interval: 5 cm) to fall at a rainfall amount of 100 mm/hour from above the roof portion 4. A normal noise meter (trade name "NA-29", manufactured by Rion Co., Ltd.) was used to measure the acoustic property of each of the test pieces (equivalent noise: the average for 5 seconds) by use of a 1/1 octave band frequency at 500 Hz, 1000 Hz, 2000 Hz and 4000 Hz. The artificial rainfall machine was set at a position 7 m apart from the center (gravity center) of the roof portion 4 upwards in the vertical direction, and the artificial rain was caused to fall from this artificial rainfall machine. The normal noise meter was set at a position 30 cm apart from the center (gravity center) of the roof portion 4 downwards in the vertical direction.

Moreover, the acoustic property was measured in the same way as described above in a state that neither the vibration damping material, the foamed adhesive layer of the foamed adhesive sheet, the foamed thermoplastic resin sheet nor the nonwoven fabric laminate was stuck onto the lower surface of the roof portion 4. The result is shown as "Reference" in Table 5.

[Table 1]

| | Nonmetallic sheet | | | | Foamed adhesive layer | | | Nonwoven fabric | Total thickness (mm) of vibration damping material |
|---|---|---|---|---|---|---|---|---|---|
| | Kind | Young's modulus (Mpa) | Density $(g/cm^3)$ | Thickness (mm) | Cross-linking agent (parts by weight) | Density $(g/cm^3)$ | Thickness (mm) | | |
| Example 1 | Foamed sheet | 1.78 | 0.025 | 4.2 | 6 | 0.20 | 1.9 | Not formed | 6.1 |
| Example 2 | Foamed sheet | 1.40 | 0.033 | 8.6 | 6 | 0.20 | 1.9 | Not formed | 10.5 |
| Example 3 | Foamed sheet | 19.4 | 0.070 | 2.9 | 6 | 0.20 | 1.9 | Not formed | 4.8 |
| Example 4 | Foamed sheet | 23.8 | 0.070 | 2.5 | 6 | 0.20 | 1.9 | Not formed | 4.4 |
| Example 5 | Foamed sheet | 35.6 | 0.070 | 2.4 | 6 | 0.20 | 1.9 | Not formed | 4.3 |
| Example 6 | Foamed sheet | 19.4 | 0.070 | 2.9 | 4 | 0.18 | 1.9 | Not formed | 4.8 |
| Example 7 | Foamed sheet | 19.4 | 0.070 | 2.9 | 1.2 | 0.19 | 1.9 | Not formed | 4.8 |
| Example 8 | Foamed sheet | 19.4 | 0.070 | 2.9 | 6 | 0.20 | 1.9 | Formed | 14.8 |
| Example 9 | Unfoamed sheet | 3270 | - | 0.05 | - | 0.23 | 1.1 | Not formed | 1.15 |
| Example 10 | Unfoamed sheet | 3160 | - | 0.05 | - | 0.23 | 1.0 | Not formed | 1.05 |
| Example 11 | Unfoamed sheet | 4310 | - | 0.08 | - | 0.23 | 1.1 | Not formed | 1.18 |
| Example 12 | Unfoamed sheet | 3270 | - | 0.05 | 6 | 0.20 | 1.9 | Not formed | 1.95 |

(continued)

| | Nonmetallic sheet | | | | Foamed adhesive layer | | | Nonwoven fabric | Total thickness (mm) of vibration damping material |
| --- | --- | --- | --- | --- | --- | --- | --- | --- | --- |
| | Kind | Young's modulus (Mpa) | Density (g/cm$^3$) | Thickness (mm) | Cross-linking agent (parts by weight) | Density (g/cm$^3$) | Thickness (mm) | | |
| Example 13 | Unfoamed sheet | 3270 | - | 0.05 | 2.4 | 0.19 | 1.9 | Not formed | 1.95 |
| Example 14 | Unfoamed sheet | 3270 | - | 0.05 | 1 | 0.19 | 1.9 | Not formed | 1.95 |
| Comparative Example 1 | - | - | - | - | 6 | 0.20 | 1.9 | - | 1.9 |
| Comparative Example 2 | - | 18.7 | 0.038 | 3.0 | - | - | - | - | 3.0 |
| Comparative Example 3 | - | - | - | - | - | - | - | - | - |

[Table 2]

| Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|
| Frequency (Hz) | Loss factor | Frequency (Hz) | Loss factor | Frequency (Hz) | Loss factor | Frequency (Hz) | Loss factor | Frequency (Hz) | Loss factor | Frequency (Hz) | Loss factor | Frequency (Hz) | Loss factor | Frequency (Hz) | Loss factor |
| 259.65 | 0.032183 | 272.09 | 0.055919 | 260.99 | 0.082814 | 270.01 | 0.068324 | 263.72 | 0.093896 | 260.05 | 0.085158 | 263.02 | 0.061346 | 261 | 0.089 |
| 725.3 | 0.038306 | 743.5 | 0.06239 | 714.35 | 0.102172 | 744.91 | 0.0849 | 717.51 | 0.110125 | 708.43 | 0.113963 | 724.09 | 0.076794 | 715 | 0.104 |
| 1414.97 | 0.040216 | 1424.85 | 0.068621 | 1376.48 | 0.112408 | 1414.61 | 0.109778 | 1381.82 | 0.119461 | 1371.35 | 0.128651 | 1382.42 | 0.09979 | 1376 | 0.114 |
| 2264.85 | 0.05345 | 2283.59 | 0.09972747 | 2248.98 | 0.125339 | 2300.68 | 0.135873 | 2277.58 | 0.13317 | 2241.87 | 0.138651 | 2287.05 | 0.131485 | 2250 | 0.127 |
| 3389.2 | 0.085833 | 3395.85 | 0.092314 | 3380.57 | 0.127446 | 3455.07 | 0.117566 | 3402.76 | 0.129974 | 3336.71 | 0.144633 | 3345.42 | 0.120093 | 3380.57 | 0.129 |
| | | | | | | | | | | 4632.78 | 0.152262 | 4631.88 | 0.130824 | | |

[Table 3]

| Example 9 | | Example 10 | | Example 11 | | Example 12 | | Example 13 | | Example 14 | |
|---|---|---|---|---|---|---|---|---|---|---|---|
| Frequency (Hz) | Loss factor | Frequency (Hz) | Loss factor | Frequency (Hz) | Loss factor | Frequency (Hz) | Loss factor | Frequency (Hz) | Loss factor | Frequency (Hz) | Loss factor |
| 257.99 | 0.059746 | 261.41 | 0.089328 | 264.81 | 0.07449 | 267.24 | 0.092353 | 268.41 | 0.120063 | 277.11 | 0.0986355 |
| 717.11 | 0.06534 | 716 | 0.105447 | 719.76 | 0.101091 | 724.41 | 0.102619 | 743.56 | 0.131429 | 751.38 | 0.129864 |
| 1397.3 | 0.060292 | 1378.45 | 0.113329 | 1384.55 | 0.109455 | 1423.86 | 0.11086 | 1432.78 | 0.126523 | 1482.11 | 0.138555 |
| 2244.36 | 0.100719 | 2274.63 | 0.136386 | 2283.9 | 0.118773 | 2208.96 | 0.121142 | 2218.99 | 0.142539 | 2233.54 | 0.165324 |
| 3348.15 | 0.100596 | 3357.56 | 0.122696 | 3388.04 | 0.122349 | 3455.52 | 0.109523 | 3305.09 | 0.135548 | 3329.59 | 0.179965 |
| 4730.92 | 0.115856 | 4706.68 | 0.133221 | 4704 | 0.129727 | 4723.15 | 0.128623 | 4653.85 | 0.142153 | 4708.66 | 0.172566 |

[Table 4]

| Comparative Example 1 | | Comparative Example 2 | | Comparative Example 3 | |
|---|---|---|---|---|---|
| Frequency (Hz) | Loss factor | Frequency (Hz) | Loss factor | Frequency (Hz) | Loss factor |
| 254.37 | 0.00472 | 269.52 | 0.009477 | 271 | 0.005 |
| 714.94 | 0.006346 | 756.91 | 0.009566 | 770 | 0.007 |
| 1404.35 | 0.007871 | 1483.05 | 0.009766 | 1480 | 0.0095 |
| 2340.92 | 0.010887 | 2462.17 | 0.010649 | 2467 | 0.012 |
| 3488.63 | 0.010706 | 3664.66 | 0.009783 | 3670 | 0.013 |

[Table 5]

| | Example 1 | Example 2 | Example 3 | Example 4 | Example 5 | Example 6 | Example 7 | Example 8 | Comparative Example 1 | Comparative Example 2 | Comparative Example 3 | Reference |
|---|---|---|---|---|---|---|---|---|---|---|---|---|
| 500 Hz | 62 | 61 | 60 | 61 | 60 | 60 | 61 | 56 | 68 | 69 | 66 | 70 |
| 1000 Hz | 55 | 56 | 54 | 55 | 54 | 54 | 55 | 51 | 64 | 64 | 60 | 65 |
| 2000 Hz | 51 | 50 | 49 | 49 | 49 | 49 | 49 | 45 | 58 | 59 | 53 | 60 |
| 4000 Hz | 47 | 46 | 46 | 46 | 46 | 46 | 46 | 43 | 55 | 56 | 52 | 58 |

(dBA)

INDUSTRIAL APPLICABILITY

The present invention provides a vibration damping material excellent in vibration damping property and lightness, and can be preferably used for vehicles, such as cars and trains, which are required to be light.

**Claims**

1. A vibration damping material fixed onto a surface of a vibrating body to attenuate vibration of the vibrating body, comprising a nonmetallic sheet and a foamed adhesive layer integrally laminated on one of the surfaces of the nonmetallic sheet.

2. The vibration damping material according to claim 1, wherein the foamed adhesive layer comprises an acrylic-based adhesive.

3. The vibration damping material according to claim 1, wherein the foamed adhesive layer comprises 6 parts by weight or less of a cross-linking agent per 100 parts by weight of a resin component constituting the foamed adhesive layer.

4. The vibration damping material according to claim 1, wherein the nonmetallic sheet is a foamed thermoplastic resin sheet.

5. The vibration damping material according to claim 4, wherein a Young's modulus of the foamed thermoplastic resin sheet is from 10 to 100 MPa.

6. The vibration damping material according to claim 4, wherein the foamed thermoplastic resin sheet comprises a polyolefin-based resin including a polypropylene-based resin having isostatic homopolypropylene and a propylene/$\alpha$-olefin copolymer, and a linear low-density polyethylene.

7. The vibration damping material according to claim 1, wherein the nonmetallic sheet is an unfoamed sheet having a Young's modulus of 100 to 100000 MPa.

8. The vibration damping material according to claim 7, wherein the unfoamed sheet is formed of an organic material.

9. The vibration damping material according to claim 7, wherein the unfoamed sheet is a synthetic resin sheet.

10. The vibration damping material according to claim 9, wherein a melting temperature of the synthetic resin constituting the synthetic resin sheet is 150 °C or more.

11. The vibration damping material according to claim 1, further comprising a fibrous layer integrally laminated on the other surface of the nonmetallic sheet.

Figure 1

A

C

B

Figure 2

A

C

B

D

Figure 3

Figure 4

Figure 5

## INTERNATIONAL SEARCH REPORT

| | International application No. |
|---|---|
| | PCT/JP2005/012684 |

**A. CLASSIFICATION OF SUBJECT MATTER**
Int.Cl$^7$ F16F15/02

According to International Patent Classification (IPC) or to both national classification and IPC

**B. FIELDS SEARCHED**

Minimum documentation searched (classification system followed by classification symbols)
Int.Cl$^7$ F16F15/00-F16F15/08

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-81084 A (Nitto Denko Corp.), 21 March, 2000 (21.03.00), Par. Nos. [0012], [0015]; Figs. 1 to 2 & US 2002/0001155 A1 & SG 000087821 A | 1-3,7 |
| Y | JP 8-35538 A (Lintec Corp.), 06 February, 1996 (06.02.96), Par. No. [0049]; Fig. 1 & US 5695867 A | 4,5 |
| Y | JP 9-40812 A (Japan Synthetic Rubber Co., Ltd.), 10 February, 1997 (10.02.97), Par. Nos. [0005] to [0006] (Family: none) | 6 |

| [X] Further documents are listed in the continuation of Box C. | | [ ] See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 July, 2005 (27.07.05) | 09 August, 2005 (09.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/012684

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 7-68696 A  (Nippon Tokushu Toryo Kabushiki Kaisha), 14 March, 1995 (14.03.95), Par. No. [0015] (Family: none) | 8,9,10 |
| Y | JP 11-223239 A  (Nissan Motor Co., Ltd.), 17 August, 1999 (17.08.99), Claim 7; Fig. 2 (Family: none) | 11 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10183883 A